# EUROPÄISCHE PATENTSCHRIFT

(11) **EP 4 393 846 B1**
(45) Veröffentlichungstag und Bekanntmachung des Hinweises auf die Patenterteilung: **03.09.2025**
(21) Anmeldenummer: 23210092.5
(22) Anmeldetag: 15.11.2023
(51) Int. Cl.: B65G 1/137, B66F 9/075

(54) **VERFAHREN ZUR KOMMISSIONIERUNG UND KOMMISSIONIERSYSTEM**
METHOD FOR COMMISSIONING AND COMMISSIONING SYSTEM
PROCÉDÉ DE PRÉPARATION DE COMMANDES ET SYSTÈME DE PRÉPARATION DE COMMANDES

(30) Priorität: 30.12.2022 DE 102022135043
(43) Veröffentlichungstag der Anmeldung: 03.07.2024
(73) Patentinhaber: STILL GmbH, 22113 Hamburg (DE)
(72) Erfinder: ABEL, Bengt, 21335 Lüneburg (DE); RUDALL, Yan, 22453 Hamburg (DE); SCHÜTHE, Dennis, 21255 Tostedt (DE); VIERECK, Volker, 23898 Kühsen (DE); BAKR, Mohamed, 21073 Hamburg (DE)
(74) Vertreter: Patentship Patentanwaltgesellschaft

(56) Entgegenhaltungen:
- EP-A1- 3 489 189
- EP-A1- 3 925 926
- EP-B1- 2 269 922
- DE-A1- 102017 103 864
- DE-A1- 102021 200 888
- US-A1- 2022 162 047

## Beschreibung

Die Erfindung betrifft ein Verfahren zur Kommissionierung von mindestens einem Objekt, insbesondere einer Ware und/oder einem Produktionsteil, mit einem Kommissionierfahrzeug mit einer durch eine Hubvorrichtung anhebbaren und absenkbaren Lastaufnahmevorrichtung, insbesondere einer Lastgabel, wobei bei einem Kommissioniervorgang das Objekt in einem Ablagevorgang von außerhalb des Kommissionierfahrzeugs auf einem auf der Lastaufnahmevorrichtung angeordneten Ziel-Ladungsträger an einer Ablageposition in einer Ablagehöhe abgelegt wird, wobei eine automatische Nivellierung der Hubhöhe der Lastaufnahmevorrichtung durchgeführt wird.

Außerdem betrifft die Erfindung ein Kommissioniersystem zur Durchführung des Verfahrens.

Für das Kommissionieren in Lagern sind Flurförderzeuge als Horizontalkommissionierer bekannt, die nur über eine beschränkte Hubhöhe verfügen. Dadurch wird es möglich, beispielsweise eine Palette oder Lastaufnahmevorrichtung so weit anzuheben, dass diese in der obersten Position ungefähr auf Hüfthöhe einer daneben stehenden Kommissionierperson sich befindet und Waren von der Kommissionierperson, ohne sich zu bücken, auf die Lastaufnahmevorrichtung abgesetzt oder von dieser entnommen werden können.

Nachteilig an diesem Stand der Technik ist jedoch, dass die Kommissionierperson relativ viel Zeit dafür aufwenden muss, die Höhenposition der Lastaufnahmevorrichtung erneut einzustellen, wenn eine oberste Schicht mit Waren abgesetzt wurde oder die oberste Schicht entladen wurde.

Bekannt sind daher Vorrichtungen zur automatischen Nivellierung, durch die die Höhenposition der Lastaufnahmevorrichtung so nachgeführt wird, dass beispielsweise die Oberkante der Waren auf einer Palette sich in der ergonomisch optimalen Höhe zum Abladen oder Aufladen befindet.

Beispielsweise ist aus der EP 2 181 959 A1 ein Gabelhubwagen zum Kommissionieren bekannt, der ein Lastteil mit einer Lastgabel aufweist, die mittels einer Hubvorrichtung anhebbar ist. Eine Sensoreinrichtung mit einem im Wesentlichen horizontalen Erfassungsbereich, insbesondere einem Laserstrahlsensor, erfasst den Beladungszustand, indem beispielsweise zwei Laserstrahlen an den Kanten einer Palettenbreite entlang erfassen, ob in deren Weg sich Waren oder Kartons befinden. Je nach Voreinstellung wird so lange angehoben, bis Waren erfasst werden, oder abgesenkt, bis keine Waren mehr erfasst werden.

Nachteilig an diesem Stand der Technik ist, dass dieser nur mit flachen Paletten, insbesondere Euro-Paletten, gut funktioniert. Wenn Ladungsträger mit Seitenwänden eingesetzt werden, wie sie beispielsweise als Rollcontainer oder Gitterboxen üblich sind und in einem großen Umfang im Bereich der Einzelhandelslogistik benutzt werden, wird durch die Erfassungssysteme die Seitenwand und nicht die Höhe der aufgeladenen Waren erfasst. Die Lösung nach dem Stand der Technik ist daher mit solchen Ladungsträgern und in vielen Bereichen der Logistik nicht benutzbar.

Ebenfalls ist es problematisch, wenn mehrere, beispielsweise zwei, Ladungsträger gleichzeitig hintereinander auf der Lastaufnahmevorrichtung, beispielsweise einer solchen mit einer besonders langen Lastgabel, angeordnet sind. Eine Nivelliereinrichtung stellt dann nicht immer die Höhe richtig ein, wenn beispielsweise die beiden Ladungsträger unterschiedlich hoch beladen sind und abhängig von den jeweils benutzten Ladungsträger eine unterschiedliche Regulierung der Höhe erforderlich wäre.

Die bekannten Systeme zur automatischen Nivellierung der Gabelhöhe erfordern auch zusätzlichen Zeitaufwand für deren Bedienung und gerade in Lagern, bei denen Personal unter Akkordiohn arbeitet, wird zum Teil die automatische Nivellierung bewusst nicht verwendet, obwohl diese in einigen Ländern bereits gesetzlich vorgeschrieben ist und Krankenkassen, Berufsgenossenschaften wie auch Gewerkschaften auf deren Verwendung sehr stark dringen.

Auch aus der DE 20 2012 004 038 U1 ist ein Flurförderzeug mit einer automatisierten Niveaunivellierung einer an einem Hubmast höhenbeweglich angeordneten Lastaufnahmevorrichtung bekannt. Dabei ist an dem freien Ende des Hubmastes eine Sensoreinheit mit einem nach unten gerichteten Abstandssensor angeordnet.

Nachteilig ist an diesem Stand der Technik, dass bei Ladungsträgern mit Seitenwänden, wie beispielsweise Rollcontainern oder Gitterboxen, durch den schrägen Erfassungswinkel nicht die Höhe der aufgeladenen Last sicher erfasst werden kann.

Aus der EP 2 987 760 A1 ist ein Flurförderzeug mit automatischer Einstellung der Nivellierungshöhe bekannt, bei dem die Sensormittel an einem Träger senkrecht oberhalb des Erfassungsbereichs der Last angeordnet sind. Dadurch kann auch bei Ladungsträgern mit Seitenwänden, wie etwa Rollcontainern oder Gitterboxen, das Nivellierungsniveau automatisch richtig eingestellt werden, und es kommt nicht zu Fehlern aufgrund einer Erfassung der Seitenwände. Durch die Positionierung senkrecht oberhalb des Erfassungsbereichs der Last kann die seitliche Ausdehnung des Erfassungsbereichs so eingestellt werden, dass Seitenwände nicht stören.

Die US2022/0162047 A1 und die EP 3 925 926 A1 offenbaren auch ein Flurförderfahrzeug mit automatischer Einstellung der Nivellierungshöhe. Weiterhin offenbaren die US2022/0162047 A1 und die EP 3 925 926 A1 ein Verfahren zur Kommissionierung von mindestens einem Objekt mit einem Kommissionierfahrzeug gemäß dem Oberbegriff des Anspruchs 1 und ein Kommissioniersystem zur Durchführung des Verfahrens nach insbesondere Anspruch 1 mit einem Kommissionierfahrzeug gemäß dem Oberbegriff des Anspruchs 7.

Die bisherigen Lösungen zur automatischen Nivellierung der Höhe der Lastaufnahmevorrichtung haben den Nachteil, dass nur eine bestimmte Schicht, meist die oberste Schicht, der Last erfasst und zur Höheneinstellung herangezogen wird. Bei Beladung der Lastaufnahmevorrichtung mit unterschiedlich hoch gestapelten Waren befinden sich somit nicht alle Oberkanten der Waren in der ergonomisch optimalen Höhe zum Abladen oder Aufladen.

Der vorliegenden Erfindung liegt daher die Aufgabe zugrunde, ein Kommissionierfahrzeug mit einer automatischen Nivellierung einer anhebbaren Lastaufnahmevorrichtung zur Verfügung zu stellen, das die zuvor genannten Nachteile vermeidet und mit dem das Be- und Entladen von Hand beim Kommissionieren erleichtert wird.

Diese Aufgabe wird verfahrensseitig erfindungsgemäß dadurch gelöst, dass mittels einer, von einer den Ablagevorgang ausführenden Kommissionierperson tragbaren, Kamera-Einrichtung die Ablagehöhe der Ablageposition bei einem einzelnen Ablagevorgang erfasst wird und eine Information über die erfasste Ablagehöhe an eine Steuerungseinheit, insbesondere eine Datenverarbeitungseinrichtung, übermittelt wird, die die Nivellierung der Hubhöhe der Lastaufnahmevorrichtung in Abhängigkeit von der Information über die erfasste Ablagehöhe steuert.

Die Kommissionierperson trägt insbesondere während des Kommissioniervorgangs und somit des Ablagevorgangs des zu kommissionierenden Objekts eine tragbare Kamera-Einrichtung, mit der die Ablagehöhe an der Ablageposition, an der das Objekt abgelegt werden soll, auf dem Ziel-Ladungsträger erfasst wird.

Die Information über die erfasste Ablagehöhe wird, insbesondere mittels Funktechnik, an die Steuerungseinheit, beispielsweise eine Datenverarbeitungseinrichtung, übermittelt. Die Steuerungseinheit ist bevorzugt auf dem Kommissionierfahrzeug angeordnet und kann beispielsweise in eine Fahrzeugsteuerungseinrichtung integriert sein.

Die Kamera-Einrichtung und die Steuerungseinheit verfügen insbesondere jeweils über eine Funkschnittstelle, so dass die Kamera-Einrichtung die Information über die Ablagehöhe an der Ablageposition des Ziel-Ladungsträgers detektieren und dem Kommissionierfahrzeug diese Information zur Verfügung stellen kann. Insbesondere kann die Verarbeitung der erfassten Ablagehöhe entweder direkt auf einer Hardware/Software an der Kamera-Einrichtung durchgeführt werden, oder es werden Rohdaten an das Kommissionierfahrzeug gesendet und dort weiterverarbeitet. Das Kommissionierfahrzeug kann dementsprechend auf die Eingabe mit Hub oder Absenken der Lastaufnahmevorrichtung reagieren, um für den Ablagevorgang des Objekts auf dem Ziel-Ladungsträger eine ergonomisch günstige Ablagehöhe der Ablageposition einzustellen.

Der Vorteil des erfindungsgemäßen Verfahrens ist eine freie Sicht auf die auf der Lastaufnahmevorrichtung abgelegten Objekte und somit eine sehr präzise Ansteuerung der Hubhöhe, um für den Ablagevorgang des Objekts auf dem Ziel-Ladungsträger eine ergonomisch günstige Ablagehöhe der Ablageposition einzustellen.

Gemäß einer vorteilhaften Ausgestaltungsform der Erfindung wird insbesondere mittels der Kamera-Einrichtung mindestens ein Körpermerkmal der den Ablagevorgang ausführenden Kommissionierperson, insbesondere die Armlänge und/oder die Körpergröße, erfasst und wird eine Information über das erfasste Körpermerkmal der Kommissionierperson an die Steuerungseinheit übermittelt, die die Nivellierung der Hubhöhe der Lastaufnahmevorrichtung in Abhängigkeit von der Information über das erfasste Körpermerkmal steuert. Über die am Körper der Kommissionierperson angebrachte Kamera-Einrichtung kann insbesondere als Körpermerkmal die Armlänge der Kommissionierperson abgeschätzt werden und so noch besser und ergonomischer auf die Bedürfnisse der Kommissionierperson die Hubhöhe der Lastaufnahmevorrichtung angepasst werden. Insbesondere kann aus dem Anbringungsort der Kamera-Einrichtung am Körper der Kommissionierperson als Körpermerkmal die Körpergröße der Kommissionierperson abgeschätzt werden, was weiterhin bei den ergonomischen Hubanpassungen berücksichtigt werden kann.

Gemäß einer vorteilhaften Weiterbildung der Erfindung wird insbesondere die Information über die erfasste Ablagehöhe und/oder die Information über das Körpermerkmal in der Kamera-Einrichtung und/oder in der Steuerungseinheit mittels eines Bildverarbeitungssystems und/oder künstlicher Intelligenz ausgewertet.

Bei der Auswertung der Information über die erfasste Ablagehöhe in der Steuerungseinheit wird vorteilhafterweise zunächst eine fahrzeugrelative Höhe des zuletzt abgelegten Objekts über der Lastaufnahmevorrichtung abgeschätzt. Daraus kann dann in Kombination mit einer aktuell eingestellten Hubhöhe der Lastaufnahmevorrichtung eine bodenrelative Höhe des zuletzt abgelegten Objekts über dem Fahrboden berechnet werden. Schließlich wird die Nivellierung der Hubhöhe der Lastaufnahmevorrichtung auf die bodenrelative Höhe eingestellt.

Insbesondere kann eine Detektion der auf dem Ziel-Ladungsträger abgelegten Objekte mittels bildgebender Sensorik, die in der Kamera-Einrichtung integriert ist, durchgeführt werden. Daraus kann eine fahrzeugrelative Höhe über der Lastaufnahmevorrichtung abgeschätzt werden. In Kombination mit der aktuell eingestellten Hubhöhe erhält man eine bodenrelative Höhe über dem Boden und damit die Hubhöhe, die eingestellt werden soll an jeder beliebigen Position auf der Lastaufnahmevorrichtung.

Für die Kamera-Einrichtung kann gemäß einer vorteilhaften Ausgestaltungsform der Erfindung insbesondere eine Helmkamera oder eine Körperkamera, beispielsweise eine Bodycam, oder eine Brillenkamera, beispielsweise eine Hololens, verwendet werden. Solche Kameras sind an sich bereits weit verbreitet und werden für unterschiedlichste Zwecke, zum Beispiel im Freizeit- und Sicherheitsbereich, angeboten.

Die Information über die erfasste Ablagehöhe und/oder die Information über das Körpermerkmal wird gemäß einer vorteilhaften Ausgestaltungsform der Erfindung insbesondere mittels Funktechnik an die Steuerungseinheit übermittelt. Die Steuerungseinheit ist insbesondere auf dem Kommissionierfahrzeug angeordnet und kann beispielsweise in eine Fahrzeugsteuerungseinrichtung integriert sein.

Ferner betrifft die Erfindung ein Kommissioniersystem zur Durchführung des Verfahrens mit einem Kommissionierfahrzeug mit einer durch eine Hubvorrichtung anhebbaren und absenkbaren Lastaufnahmevorrichtung, insbesondere einer Lastgabel, wobei in einem Kommissioniervorgang ein Objekt, insbesondere eine Ware und/oder ein Produktionsteil, in einem Ablagevorgang von außerhalb des Kommissionierfahrzeugs auf einem auf der Lastaufnahmevorrichtung angeordneten Ziel-Ladungsträger ablegbar ist, wobei das Kommissionierfahrzeug mit einer automatischen Nivellierung der Hubhöhe der Lastaufnahmevorrichtung versehen ist.

Beim Kommissioniersystem wird die gestellte Aufgabe dadurch gelöst, dass das Kommissioniersystem eine tragbare Kamera-Einrichtung umfasst, die eingerichtet ist, um von einer den Ablagevorgang ausführenden Kommissionierperson getragen zu werden, wobei die Kamera-Einrichtung dazu ausgebildet ist, eine Ablagehöhe einer Ablageposition bei einem einzelnen Ablagevorgang zu erfassen, und eine drahtlose Datenübertragungseinrichtung vorgesehen ist, die dazu ausgebildet ist, eine Information über die erfasste Ablagehöhe an eine Steuerungseinheit, insbesondere eine Datenverarbeitungseinrichtung, zu übermitteln, die dazu ausgebildet ist, die Nivellierung der Hubhöhe der Lastaufnahmevorrichtung in Abhängigkeit von der Information über die erfasste Ablagehöhe zu steuern.

Gemäß einer vorteilhaften Ausgestaltungsform der Erfindung ist die Kamera-Einrichtung insbesondere dazu ausgebildet, mindestens ein Körpermerkmal der den Ablagevorgang ausführenden Kommissionierperson, insbesondere die Armlänge und/oder die Körpergröße, zu erfassen und die Datenübertragungseinrichtung dazu ausgebildet, eine Information über das erfasste Körpermerkmal der Kommissionierperson an die Steuerungseinheit zu übermitteln, die dazu ausgebildet ist, die Nivellierung der Hubhöhe der Lastaufnahmevorrichtung in Abhängigkeit von der Information über das erfasste Körpermerkmal zu steuern.

Gemäß einer vorteilhaften Ausgestaltungsform der Erfindung umfasst die tragbare Kamera-Einrichtung insbesondere eine Helmkamera oder eine Körperkamera, beispielsweise eine Bodycam, oder eine Brillenkamera, beispielsweise eine Hololens.

Gemäß einer vorteilhaften Ausgestaltungsform der Erfindung ist insbesondere die Steuerungseinheit auf dem Kommissionierfahrzeug angeordnet.

Gemäß einer vorteilhaften Ausgestaltungsform der Erfindung ist insbesondere die drahtlose Datenübertragungseinrichtung als Funkeinrichtung ausgebildet.

Die Erfindung bietet eine ganze Reihe von Vorteilen:
Durch die automatische Anpassung der Hubvorrichtung, insbesondere des Gabelhubs, ist die Beladung des Ziel-Ladungsträgers für die Kommissionierperson ergonomischer und führt damit zu einer geringeren körperlichen Belastung. Auch der Zeitaufwand zur Kommissionierung sinkt, was unweigerlich zu einer gesteigerten Performance des Gesamtsystems führt, ohne dass eine zusätzliche Belastung der Kommissionierperson erfolgt.

Das erfindungsgemäße Verfahren kann auch zum automatischen Umschalten der Ziel-Ladungsträgers genutzt werden, sofern auf der Lastaufnahmevorrichtung mehrere Ziel-Ladungsträger angeordnet sind.

Weiterhin kann das Verfahren als Qualitätskontrolle und Bestätigung genutzt werden, wenn es an ein Picking-Managementsystem angeschlossen wird.

Darüber hinaus kann ein Kommissionierfahrzeug in einfacher Weise zu einem erfindungsgemäßen Kommissioniersystem aufgerüstet werden, indem eine entsprechende tragbare Kamera-Einrichtung und eine Steuerungseinheit in Hardware oder Software nachgerüstet wird.

Weitere Vorteile und Einzelheiten der Erfindung werden anhand des in der schematischen Figur dargestellten Ausführungsbeispiels näher erläutert. Hierbei zeigt die
- Figur: ein Kommissionierfahrzeug in der Draufsicht und eine Kommissionierperson in der Seitenansicht.

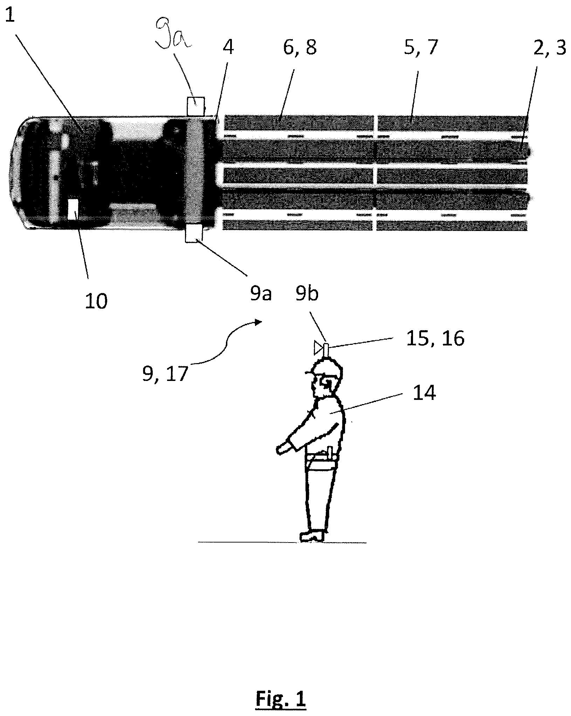

Die Figur 1 zeigt ein Kommissionierfahrzeug 1 mit einer Lastaufnahmevorrichtung 2, die als Lastgabel 3 ausgebildet ist. Die Lastgabel 3 kann mittels einer Hubvorrichtung 4, die zum Beispiel einen vertikalen Hubmast und einen daran höhenbeweglich angeordneten Hubschlitten umfasst, an dem die Lastgabel 3 befestigt ist, angehoben und abgesenkt werden. Auf der Lastgabel 3 befinden sich mindestens ein Ziel-Ladungsträger 5, 6, der beispielsweise als Ziel-Palette 7, 8 ausgebildet ist. Im dargestellten Ausführungsbeispiel befinden sich auf der Lastaufnahmevorrichtung 2 zwei Ziel-Ladungsträger 5, 6.

Um einer Kommissionierperson 14 in einem Ablagevorgang ein ergonomisches Ablegen eines Objekts auf dem Ziel-Ladungsträger 5 bzw. 6 zu ermöglichen, ist eine automatische Anpassung der Hubhöhe der Hubvorrichtung 4 an die Höhe der auf dem Ziel-Ladungsträger 5 bzw. 6 bereits gestapelten Objekte vorgesehen. Dabei basiert die Steuerung der Hubhöhe auf einer Beobachtung der auf den Ziel-Ladungsträger 5, 6 abgelegten Objekte durch die Kommissionierperson 14.

Hierzu wird die Kommissionierperson 14 mit einer tragbaren Kamera-Einrichtung 15, insbesondere einer Helmkamera 16, ausgestattet. Die Kamera-Einrichtung 15 hat eine Funkschnittstelle mit dem Kommissionierfahrzeug 1, so dass die Kamera-Einrichtung 15 die genaue Ablagehöhe auf dem Ziel-Ladungsträger 5 bzw. 6 an einer Ablageposition, an der das Objekt abgelegt werden soll, detektieren kann und dem Kommissionierfahrzeug 1 diese Information über die erfasste Ablagehöhe an der Ablageposition zur Verfügung stellen kann. Hierzu ist insbesondere eine Funkeinrichtung 9 als drahtlose Datenübertragungseinrichtung 17 vorgesehen, die mindestens eine auf dem Kommissionierfahrzeug 1 angebrachte, Fahrzeug-Funkeinrichtung 9a und eine, in die Kamera-Einrichtung 15 integrierte, Kamera-Funkeinrichtung 9b umfasst.

Auf dem Kommissionierfahrzeug 1 ist eine Steuerungseinheit 10, beispielsweise eine Datenverarbeitungseinrichtung, angeordnet, die die Information der erfassten Ablagehöhe der Kamera-Einrichtung 15 verarbeitet.

Das Kommissionierfahrzeug 1 kann dementsprechend auf die Eingabe mit Hub oder Absenken der Lastaufnahmevorrichtung 2 reagieren und so die Nivellierung der Hubhöhe der Lastaufnahmevorrichtung 2 derart anpassen, dass für den Ablagevorgang des Objekts auf dem Ziel-Ladungsträger 5, 6 eine ergonomisch günstige Ablagehöhe an der Ablageposition eingestellt wird.

Alternativ oder zusätzlich kann mittels der Kamera-Einrichtung 15 mindestens ein Körpermerkmal der den Ablagevorgang ausführenden Kommissionierperson 14, beispielsweise die Armlänge und/oder die Körpergröße, erfasst werden und eine Information über das erfasste Körpermerkmal der Kommissionierperson 14 an die Steuerungseinheit 10 übermittelt werden. Das Kommissionierfahrzeug 1 kann dementsprechend auf diese Eingabe mit Hub oder Absenken der Lastaufnahmevorrichtung 2 reagieren und so die Nivellierung der Hubhöhe der Lastaufnahmevorrichtung 2 derart anpassen, dass für den Ablagevorgang des Objekts auf dem Ziel-Ladungsträger 5, 6 eine ergonomisch günstige Ablagehöhe an der Ablageposition eingestellt wird. Über die am Körper der Kommissionierperson 14 angebrachte Kamera-Einrichtung 15 kann beispielsweise als Körpermerkmal die Armlänge der Kommissionierperson 14 abgeschätzt werden und so noch besser und ergonomischer auf die Bedürfnisse der Kommissionierperson 14 die Hubhöhe der Lastaufnahmevorrichtung 2 und somit die Ablagehöhe der Ablageposition auf dem Ziel-Ladungsträger 5, 6 angepasst werden. Alternativ oder zusätzlich kann aus dem Anbringungsort der Kamera-Einrichtung 15 am Körper der Kommissionierperson 15 als Körpermerkmal die Körpergröße der Kommissionierperson abgeschätzt werden, was weiterhin bei den ergonomischen Hubanpassungen berücksichtigt werden kann.

## Patentansprüche

1. Verfahren zur Kommissionierung von mindestens einem Objekt, insbesondere einer Ware und/oder einem Produktionsteil, mit einem Kommissionierfahrzeug (1) mit einer durch eine Hubvorrichtung (4) anhebbaren und absenkbaren Lastaufnahmevorrichtung (2), insbesondere einer Lastgabel (3), wobei bei einem Kommissioniervorgang das Objekt in einem Ablagevorgang von außerhalb des Kommissionierfahrzeugs (1) auf einem auf der Lastaufnahmevorrichtung (2) angeordneten Ziel-Ladungsträger (5, 6) an einer Ablageposition in einer Ablagehöhe abgelegt wird, wobei eine automatische Nivellierung der Hubhöhe der Lastaufnahmevorrichtung (2) durchgeführt wird, **dadurch gekennzeichnet, dass** mittels einer, von einer den Ablagevorgang ausführenden Kommissionierperson (14) tragbaren, Kamera-Einrichtung (15) die Ablagehöhe der Ablageposition bei einem einzelnen Ablagevorgang erfasst wird und eine Information über die erfasste Ablagehöhe an eine Steuerungseinheit (10), insbesondere eine Datenverarbeitungseinrichtung, übermittelt wird, die die Nivellierung der Hubhöhe der Lastaufnahmevorrichtung (2) in Abhängigkeit von der Information über die erfasste Ablagehöhe steuert.

2. Verfahren nach Anspruch 1, **dadurch gekennzeichnet, dass** mittels der Kamera-Einrichtung (15) mindestens ein Körpermerkmal der den Ablagevorgang ausführenden Kommissionierperson (14), insbesondere die Armlänge und/oder die Körpergröße, erfasst wird und eine Information über das erfasste Körpermerkmal der Kommissionierperson (14) an die Steuerungseinheit (10) übermittelt wird, die die Nivellierung der Hubhöhe der Lastaufnahmevorrichtung (2) in Abhängigkeit von der Information über das erfasste Körpermerkmal steuert.

3. Verfahren nach Anspruch 1 oder 2, **dadurch gekennzeichnet, dass** die Information über die erfasste Ablagehöhe und/oder die Information über das Körpermerkmal in der Kamera-Einrichtung (15) und/oder in der Steuerungseinheit (10) mittels eines Bildverarbeitungssystems und/oder künstlicher Intelligenz ausgewertet wird.

4. Verfahren nach Anspruch 3, **dadurch gekennzeichnet, dass** bei der Auswertung der Information über die erfasste Ablagehöhe in der Steuerungseinheit (10) eine fahrzeugrelative Höhe des zuletzt abgelegten Objekts über der Lastaufnahmevorrichtung (2) abgeschätzt wird und daraus in Kombination mit einer aktuell eingestellten Hubhöhe der Lastaufnahmevorrichtung (2) eine bodenrelative Höhe des zuletzt abgelegten Objekts über dem Fahrboden berechnet wird und die Nivellierung der Hubhöhe der Lastaufnahmevorrichtung (2) auf die bodenrelative Höhe eingestellt wird.

5. Verfahren nach einem der Ansprüche 1 bis 4, **dadurch gekennzeichnet, dass** für die Kamera-Einrichtung (15) eine Helmkamera (16) oder eine Körperkamera, insbesondere eine Bodycam, oder eine Brillenkamera verwendet wird.

6. Verfahren nach einem der Ansprüche 1 bis 5, **dadurch gekennzeichnet, dass** die Information über die erfasste Ablagehöhe und/oder die Information über das Körpermerkmal mittels Funktechnik an die Steuerungseinheit (10) übermittelt wird.

7. Kommissioniersystem zur Durchführung des Verfahrens nach einem der Ansprüche 1 bis 6 mit einem Kommissionierfahrzeug (1) mit einer durch eine Hubvorrichtung (4) anhebbaren und absenkbaren Lastaufnahmevorrichtung (2), insbesondere einer Lastgabel (3), wobei in einem Kommissioniervorgang ein Objekt in einem Ablagevorgang von außerhalb des Kommissionierfahrzeugs (1) auf einem auf der Lastaufnahmevorrichtung (2) angeordneten Ziel-Ladungsträger (5, 6) ablegbar ist, wobei das Kommissionierfahrzeug (1) mit einer automatischen Nivellierung der Hubhöhe der Lastaufnahmevorrichtung (2) versehen ist, **dadurch gekennzeichnet, dass** das Kommissioniersystem eine tragbare Kamera-Einrichtung (15) umfasst, die eingerichtet ist, um von einer den Ablagevorgang ausführenden Kommissionierperson (14) getragen zu werden, wobei die Kamera-Einrichtung (15) dazu ausgebildet ist, eine Ablagehöhe einer Ablageposition bei einem einzelnen Ablagevorgang zu erfassen, und eine drahtlose Datenübertragungseinrichtung (17) vorgesehen ist, die dazu ausgebildet ist, eine Information über die erfasste Ablagehöhe an eine Steuerungseinheit (10), insbesondere eine Datenverarbeitungseinrichtung, zu übermitteln, die dazu ausgebildet ist, die Nivellierung der Hubhöhe der Lastaufnahmevorrichtung (2) in Abhängigkeit von der Information über die erfasste Ablagehöhe zu steuern.

8. Kommissioniersystem nach Anspruch 7, **dadurch gekennzeichnet, dass** die Kamera-Einrichtung (15) dazu ausgebildet ist, mindestens ein Körpermerkmal der den Ablagevorgang ausführenden Kommissionierperson (14), insbesondere die Armlänge und/oder die Körpergröße, zu erfassen und die drahtlose Datenübertragungseinrichtung (17) dazu ausgebildet ist, eine Information über das erfasste Körpermerkmal der Kommissionierperson (14) an die Steuerungseinheit (10) zu übermitteln, die dazu ausgebildet ist, die Nivellierung der Hubhöhe der Lastaufnahmevorrichtung (2) in Abhängigkeit von der Information über das erfasste Körpermerkmal steuern.

9. Kommissioniersystem nach Anspruch 7 oder 8, **dadurch gekennzeichnet, dass** die tragbare Kamera-Einrichtung (15) eine Helmkamera (16) oder eine Körperkamera, insbesondere eine Bodycam, oder eine Brillenkamera umfasst.

10. Kommissioniersystem nach einem der Ansprüche 7 bis 9, **dadurch gekennzeichnet, dass** die Steuerungseinheit (10) auf dem Kommissionierfahrzeug (1) angeordnet ist.

11. Kommissioniersystem nach einem der Ansprüche 7 bis 10, **dadurch gekennzeichnet, dass** die drahtlose Datenübertragungseinrichtung (17) als Funkeinrichtung (9) ausgebildet ist.

## Claims

1. Method for picking at least one object, in particular a commodity and/or a production part, using a picking vehicle (1) having a load-carrying apparatus (2), in particular a load fork (3), that can be raised and lowered by a lifting apparatus (4), wherein a picking operation involves the object being deposited on a target load carrier (5, 6), arranged on the load-carrying apparatus (2), at a depositing position at a depositing height from outside the picking vehicle (1) in a depositing operation, wherein the lifting height of the load-carrying apparatus (2) is automatically levelled, **characterized in that** a camera device (15), which can be carried by a picker (14) performing the depositing operation, is used to capture the depositing height of the depositing position for a single depositing operation, and information about the captured depositing height is transmitted to a control unit (10), in particular a data processing device, which controls the levelling of the lifting height of the load-carrying apparatus (2) on the basis of the information about the captured depositing height.

2. Method according to Claim 1, **characterized in that** the camera device (15) is used to capture at least one body feature of the picker (14) performing the depositing operation, in particular the arm length and/or the height, and information about the captured body feature of the picker (14) is transmitted to the control unit (10), which controls the levelling of the lifting height of the load-carrying apparatus (2) on the basis of the information about the captured body feature.

3. Method according to Claim 1 or 2, **characterized in that** the information about the captured depositing height and/or the information about the body feature is evaluated in the camera device (15) and/or in the control unit (10) by means of an image processing system and/or artificial intelligence.

4. Method according to Claim 3, **characterized in that** the evaluation of the information about the captured depositing height in the control unit (10) involves a height, in relation to the vehicle, of the last deposited object above the load-carrying apparatus (2) being assessed and this being used, in combination with a currently set lifting height of the load-carrying apparatus (2), to calculate a height, in relation to the ground, of the last deposited object above the ground, and the levelling of the lifting height of the load-carrying apparatus (2) being set to the height in relation to the ground.

5. Method according to one of Claims 1 to 4, **characterized in that** a helmet camera (16) or a body camera, in particular a bodycam, or a spectacle camera is used for the camera device (15).

6. Method according to one of Claims 1 to 5, **characterized in that** the information about the captured depositing height and/or the information about the body feature is transmitted to the control unit (10) by means of radio technology.

7. Picking system for carrying out the method according to one of Claims 1 to 6 using a picking vehicle (1) having a load-carrying apparatus (2), in particular a load fork (3), that can be raised and lowered by a lifting apparatus (4), wherein a picking operation can involve an object being deposited on a target load carrier (5, 6), arranged on the load-carrying apparatus (2), from outside the picking vehicle (1) in a depositing operation, wherein the picking vehicle (1) is provided with automatic levelling of the lifting height of the load-carrying apparatus (2), **characterized in that** the picking system comprises a portable camera device (15) that is designed to be carried by a picker (14) performing the depositing operation, wherein the camera device (15) is configured to capture a depositing height of a depositing position for a single depositing operation, and there is provision for a wireless data transmission device (17) that is configured to transmit information about the captured depositing height to a control unit (10), in particular a data processing device, which is configured to control the levelling of the lifting height of the load-carrying apparatus (2) on the basis of the information about the captured depositing height.

8. Picking system according to Claim 7, **characterized in that** the camera device (15) is configured to capture at least one body feature of the picker (14) performing the depositing operation, in particular the arm length and/or the height, and the wireless data transmission device (17) is configured to transmit information about the captured body feature of the picker (14) to the control unit (10), which is configured to control the levelling of the lifting height of the load-carrying apparatus (2) on the basis of the information about the captured body feature.

9. Picking system according to Claim 7 or 8, **characterized in that** the portable camera device (15) comprises a helmet camera (16) or a body camera, in particular a bodycam, or a spectacle camera.

10. Picking system according to one of Claims 7 to 9, **characterized in that** the control unit (10) is arranged on the picking vehicle (1).

11. Picking system according to one of Claims 7 to 10, **characterized in that** the wireless data transmission device (17) is configured as a radio device (9).

## Revendications

1. Procédé de préparation de commandes d'au moins un objet, en particulier une marchandise et/ou une pièce de production, à l'aide d'un véhicule de préparation de commandes (1) comportant un dispositif de réception de charge (2), en particulier une fourche de levage (3), pouvant être levé et abaissé par un dispositif de levage (4), un objet étant déposé lors d'une opération de préparation de commandes au cours d'une opération de dépose depuis l'extérieur du véhicule de préparation de commandes (1) sur un support de charge cible (5, 6) agencé sur le dispositif de réception de charge (2) à une position de dépose et à une hauteur de dépose, un réglage de niveau automatique de la hauteur de levage du dispositif de réception de charge (2) étant effectué, **caractérisé en ce que**, au moyen d'un dispositif à caméra (15) portable par une personne préparant les commandes (14) exécutant l'opération de dépose, la hauteur de dépose de la position de dépose est détectée lors d'une opération de dépose individuelle et une information concernant la hauteur de dépose détectée est transmise à une unité de commande (10), en particulier un dispositif de traitement de données, qui commande le réglage de niveau de la hauteur de levage du dispositif de réception de charge (2) en fonction de l'information concernant la hauteur de dépose détectée.

2. Procédé selon la revendication 1, **caractérisé en ce qu'**au moins une caractéristique corporelle de la personne préparant les commandes (14) exécutant l'opération de dépose, en particulier la longueur du bras et/ou la taille corporelle, est détectée au moyen du dispositif à caméra (15), et une information concernant la caractéristique corporelle détectée de la personne préparant les commandes (14) est transmise à l'unité de commande (10), laquelle commande le réglage de niveau de la hauteur de levage du dispositif de réception de charge (2) en fonction de l'information concernant la caractéristique corporelle détectée.

3. Procédé selon la revendication 1 ou 2, **caractérisé en ce que** l'information concernant la hauteur de dépose détectée et/ou l'information concernant la caractéristique corporelle est évaluée dans le dispositif à caméra (15) et/ou dans l'unité de commande (10) au moyen d'un système de traitement d'image et/ou d'une intelligence artificielle.

4. Procédé selon la revendication 3, **caractérisé en ce que**, lors de l'évaluation de l'information concernant la hauteur de dépose détectée dans l'unité de commande (10), une hauteur par rapport au véhicule de l'objet le plus récemment déposé sur le dispositif de réception de charge (2) est estimée et, à partir de celle-ci, en combinaison avec une hauteur de levage actuellement réglée du dispositif de réception de charge (2), une hauteur par rapport au sol de l'objet le plus récemment déposé sur le sol de conduite est calculée et le réglage de niveau de la hauteur de levage du dispositif de réception de charge (2) est ajusté à la hauteur par rapport au sol.

5. Procédé selon l'une quelconque des revendications 1 à 4, **caractérisé en ce qu'**un dispositif à caméra pour casque (16) ou une caméra corporelle, en particulier une caméra-piéton, ou une caméra de lunettes est utilisé(e) pour le dispositif à caméra (15).

6. Procédé selon l'une quelconque des revendications 1 à 5, **caractérisé en ce que** l'information concernant la hauteur de dépose détectée et/ou l'information concernant la caractéristique corporelle est transmise à l'unité de commande (10) au moyen d'une technique radio.

7. Système de préparation de commandes destiné à mettre en œuvre le procédé selon l'une quelconque des revendications 1 à 6, à l'aide d'un véhicule de préparation de commandes (1) comportant un dispositif de réception de charge (2), en particulier une fourche de levage (3), pouvant être levé et abaissé par un dispositif de levage (4), un objet pouvant être déposé lors d'une opération de préparation de commandes au cours d'une opération de dépose depuis l'extérieur du véhicule de préparation de commandes (1) sur un support de charge cible (5, 6) agencé sur le dispositif de réception de charge (2), le véhicule de préparation de commandes (1) étant pourvu d'un réglage de niveau automatique de la hauteur de levage du dispositif de réception de charge (2), **caractérisé en ce que** le système de préparation de commandes comprend un dispositif à caméra (15) portable, lequel est conçu pour être porté par une personne préparant les commandes (14) exécutant l'opération de dépose, le dispositif à caméra (15) étant conçu pour détecter une hauteur de dépose d'une position de dépose lors d'une opération de dépose individuelle, et un dispositif de transmission de données sans fil (17) étant prévu, lequel est conçu pour transmettre une information concernant la hauteur de dépose détectée à une unité de commande (10), en particulier un dispositif de traitement de données, laquelle est conçue pour commander le réglage de niveau de la hauteur de levage du dispositif de réception de charge (2) en fonction de l'information concernant la hauteur de dépose détectée.

8. Système de préparation de commandes selon la revendication 7, **caractérisé en ce que** le dispositif à caméra (15) est conçu pour détecter au moins une caractéristique corporelle de la personne préparant les commandes (14) exécutant l'opération de dépose, en particulier la longueur du bras et/ou la taille corporelle, et le dispositif de transmission de données sans fil (17) est conçu pour transmettre une information concernant la caractéristique corporelle détectée de la personne préparant les commandes (14) à l'unité de commande (10), laquelle est conçue pour commander le réglage de niveau de la hauteur de levage du dispositif de réception de charge (2) en fonction de l'information concernant la caractéristique corporelle détectée.

9. Système de préparation de commandes selon la revendication 7 ou 8, **caractérisé en ce que** le dispositif à caméra (15) portable comprend un dispositif à caméra pour casque (16) ou une caméra corporelle, en particulier une caméra-piéton, ou une caméra de lunettes.

10. Système de préparation de commandes selon l'une quelconque des revendications 7 à 9, **caractérisé en ce que** l'unité de commande (10) est agencée sur le véhicule de préparation de commandes (1).

11. Système de préparation de commandes selon l'une quelconque des revendications 7 à 10, **caractérisé en ce que** le dispositif de transmission de données sans fil (17) est conçu sous forme de dispositif radio (9).
